# EUROPEAN PATENT APPLICATION

(11) **EP 4 840 641 A1**
(43) Date of publication of application: **18.11.2026**
(21) Application number: 25176990.7
(22) Date of filing: 16.05.2025
(51) Int. Cl.: B41J 3/28, B41J 3/407, B41J 3/60, B41J 11/00, B41J 11/46, B41J 13/00

(54) **PRINTER FOR PRINTING PRINT JOBS ON MEDIA PIECES PLACEABLE ON A SURFACE OF THE PRINTER AND A METHOD THEREFOR**

(71) Applicant: Canon Production Printing Holding B.V., 5914 HH Venlo (NL)
(72) Inventor: GERRITS, Antonius M., 5914HH Venlo (NL)
(74) Representative: Canon Production Printing IP Department

(57) **Abstract**

The invention relates to a printer (1) comprising a rectangular surface with alignment origins (21, 22) for placing a print medium (15) to be printed upon. The print medium has a plurality of medium corners. The printer comprises a print controller for receiving at least one print job comprising print job settings and print job data to be printed on the print medium and controlling the printing of the at least one received print job on the print medium, an armature constructed to move over the surface in at least one direction, and a print head configured to eject recording material on the print medium and attached to the armature. Each alignment origin of the rectangular surface comprises a different sign and the print controller has in storage a printable image of each different sign.

## Description

### FIELD OF THE INVENTION

The invention relates to a printer comprising a rectangular surface with alignment origins for placing a print medium to be printed upon, the print medium having a plurality of medium corners, a print controller for receiving at least one print job comprising print job settings and print job data to be printed on the print medium and controlling the printing of the at least one received print job on the print medium, an armature constructed to move over the surface in at least one direction, and a print head configured to eject recording material on the print medium and attached to the armature. The printer may be a flatbed printer for printing on rigids or a hybrid printer for printing rigids and rolls.

### BACKGROUND OF THE INVENTION

When printing duplex rigids on flatbed printers and hybrid printers, the printing of the front and back of a rigid must happen while using the same physical origin of the rigid. This is needed to get a proper front back registration in case of e.g. rigids that are slightly different size than expected or a little slanted.

In many cases the operator has to solve this issue. For example, by means of a user interface of the printer guidance is provided to combine two print jobs into one batch job that asks to print the separate parts in different steps, which is actually not a real solution.

In other fields QR codes can be printed on one side of a media (front or back) that can be used to identify which printed media is inserted into a printer so the printer itself can decide which back image to print on what sheet (with what front) is fed through the system and in what orientation. However, this solution does not take into account printers that have multiple alignment originals such as flatbeds and hybrids. Said approach is extendable to flatbed printers and hybrid printers but needs a camera that somewhere between printing of the front and back can identify the QR code.

It is an object of the invention to provide a printer which achieves a simpler and cheaper solution to the problem stated here-above.

### SUMMARY OF THE INVENTION

According to the present invention this object is achieved by providing a printer according to claim 1. Each alignment origin of the rectangular surface comprises a different sign and the print controller has in storage a printable image of each different sign. The different signs are printed on, adhered to or engraved in the rectangular surface.

As a next step printable images of the signs residing in storage of the print controller are printed on the rigids when printing the front side of the rigid that can be used for positioning the rigids. For clarity reasons numbers can be printed additionally on a first side of the print medium to show on which alignment origin the back side of the print medium must be aligned.

The printer delivers assist and support for loading the print media for a second production step, for example for printing on the backside of a print medium. The assist and support leads to less errors with (manual) duplex printing of print media. Also The present invention can be used for flexible cut sheet media on a flatbed. The present invention also leads to a reduction of wasted print media.

According to an embodiment the different sign is an alphanumeric sign, a pictogram or a two-dimensional geometrical object.

According to an embodiment the printer is a flatbed printer and the rectangular surface is a flatbed which has at least four alignment origins, and wherein four alignment origins of the at least four alignment origins are positioned at the corners of the flatbed.

According to an embodiment the printer is a hybrid printer for printing on rolls and rigids which are fed into the printer by means of a feeding table, and the rectangular surface is the feeding table which comprises one alignment origin for left alignment of the print medium and another alignment origin for right alignment of the print medium.

According to an embodiment the printer comprises a user interface and the print controller is configured to send additional instructions to the user interface how and where to move a rigid for a next production step.

The present invention also relates to a method for duplex printing on a printer according to the present invention, wherein the method comprises the steps of the print controller receiving a print job for printing at least one first image on a first side of the print medium according to the print job data and the print job settings of the print job, wherein the print medium is intended to be aligned in a first alignment origin of the surface and at least one second image on a second side of the print medium according to the print job data and the print job settings of the print job, wherein the print medium is intended to be aligned in a second alignment origin of the surface, printing the at least one first image on the first side of the print medium which is aligned in the first alignment origin, and printing the at least one second image on the second side of the print medium which is aligned in the second alignment origin, wherein the method comprises the step of printing the printable image of the sign of the second alignment origin of the surface in a medium corner of the plurality of medium corners of the print medium, which medium corner corresponds in which alignment origin the print medium is currently aligned on, on the first side of the print medium simultaneously with printing the at least one first image.

According to an embodiment the print medium is left aligned when printing the at least one first image on the first side of the print medium and the print medium is right aligned when printing the at least one second image on the second side of the print medium.

According to an embodiment the print job is a variable data print job comprising a plurality of data records and the method comprises the step of printing a corresponding number of a data record on the first side of the print medium close to the printable image of the sign of the second alignment origin. For variable data printing it is handy to add the number of the record on the print medium. Then the print controller can provide a better instruction on the user interface of the printer how to place which print medium of what data record where for a next production step.

According to an embodiment the printer comprises a user interface screen for user interaction and the method comprises the step of giving feedback or instructions on the user interface screen how the print medium when turned upside down is to be aligned in the respective alignment origin before printing on the second side of the print medium.

The present invention also relates to a non-transitory recording medium comprising computer executable program code configured to instruct a flatbed or hybrid printer to perform the method according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
- Fig. 1: shows a first printing system according to the present invention;
- Fig. 2: shows a second printing system according to the present invention;
- Fig. 3: is a top view of the feed table of the printing system in Fig. 1;
- Fig. 4: is a top view of the flatbed area of the printing system in Fig. 2;
- Fig. 5: is a top view of a larger flatbed area than the flatbed area shown in Fig. 4;
- Figs. 6 - 8: is a schematic drawing of a way of working according to the present invention;
- Fig. 9: is a flowchart of an embodiment of the method according to the present invention; and
- Fig. 10: is a schematic diagram of a non-transitory recording medium according to the present invention.

### DETAILED DESCRIPTION OF EMBODIMENTS

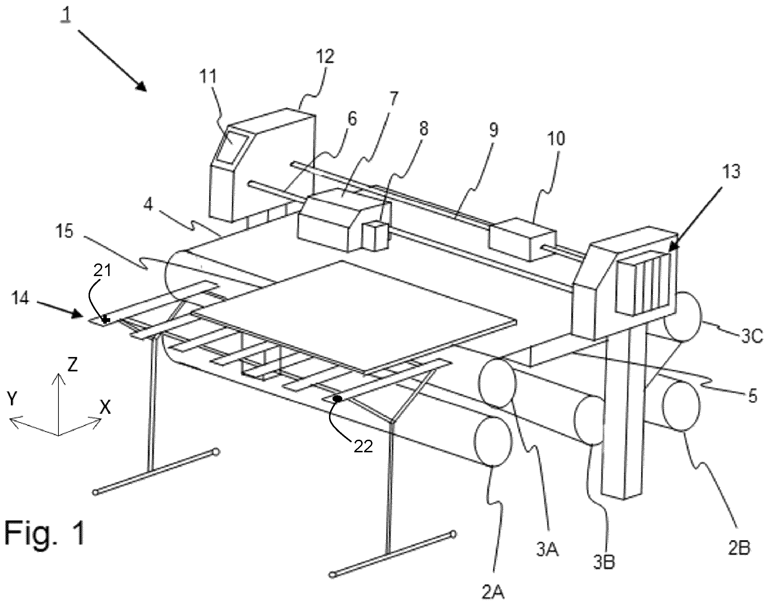

Fig. 1 shows a first example of a printing system according to the present invention. The first printing system is a wide format inkjet printer 1. The wide-format printer 1 comprises an inkjet printing assembly 7 for printing on a print medium 15. The print medium 15 in Fig. 1 is a relatively rigid substrate, such as a panel. The print medium 15 is supplied from a media input unit 14, which may be configured for storing a plurality of such print media 15 and supplying these to the printer 1. The printer 1 comprises transport means for receiving and transporting the print medium 15 along the inkjet printing assembly 7. In Fig. 1, the transport means comprise an endless transport belt 4 supported on a plurality of support rollers 3A, 3B, 3C. At least one of the support rollers 3A, 3B, 3C is provided with driving means for moving the belt 4. Additionally, one or more one of the support rollers 3A, 3B, 3C may be configured to be moved and/or tilted to adjust and control the lateral position of the belt 4. The inkjet printing assembly 7 may be provided with a sensor 8, such as a CCD camera, to determine the relative position of belt 4 and/or the print medium 15. Data from said sensor 8 may be applied to control the position of the belt 4 and/or the print medium 15. The belt 4 is further provided with through-holes and a suction box 5 in connection with a suction source (not shown), such that an negative pressure may be applied to the print medium 15 via the through-holes in the belt 4. The negative pressure adheres the print medium 15 flatly to the belt 4 and prevents displacement of the print medium 15 with respect to the belt 4. Due to this holding the belt 4 is able to transport the print medium 15. It will be appreciated that other suitable transport means, such as rollers, steppers, etc., may alternatively be applied. The print medium 15 may be transported stepwise and/or in continuous movement.

The inkjet printing assembly 7 is configured to translate along a first guide beam 6 in a scanning direction. The scanning direction is perpendicular to the direction in which the print medium is transported by the belt 4. The inkjet printing assembly 7 holds a plurality of print heads (not shown), which are configured to jet a plurality of different marking materials (different colours of ink, primers, coatings, etc.) on the print medium 15. Each marking material for use in the printing assembly 7 is stored in one of a plurality of containers arranged in fluid connection with the respective print heads for supplying marking material to said print heads to print an image on the print medium 15.

The ejection of the marking material from the print heads is performed in accordance with data provided in the respective print job. The timing by which the droplets of marking material are released from the print heads determines their position on the print medium 15. The timing may be adjusted based on the position of the inkjet printing assembly 7 along the first guide beam 6. The above mentioned sensor 8 may therein be applied to determine the relative position and/or velocity of the inkjet printing assembly 7 with respect to the print medium 15. Based upon data from the sensor 8, the release timing of the marking material may be adjusted.

The marking materials may require treatment to properly fixate them on the print medium. Thereto, a fixation unit 10 is provided downstream of the inkjet printing assembly 7. The fixation unit 10 may emit heat and/or radiation to facilitate the marking material fixation process. In the example of Fig. 1, the fixation unit 10 is a radiation emitter, which emits light of certain frequencies, which interacts with the marking materials, for example UV light in case of UV-curable inks. The fixation unit 10 in Fig. 1 is translatable along a second guide beam 9. Other fixation units 10, such as page-wide curing or drying stations may also be applied. Further, the inkjet printing assembly 7 may be provided with a further fixation unit on the same carriage which holds the print heads. This further fixation unit can be used to (partially) cure and/or harden the marking materials, independent of or interaction with the fixation unit 10.

After printing, and optionally fixation, the print medium 15 is transported to a receiving unit (not shown). The receiving unit may comprise a take-up roller for winding up the print medium 15, a receiving tray for supporting sheets of print medium 15, or a rigid media handler, similar to the media input unit 14. Optionally, the receiving unit may comprise processing means for processing the medium 8, 9 after printing, e.g. a posttreatment device such as a coater, a folder, a cutter, or a puncher.

The wide-format printer 1 furthermore comprises a user interface 11 for receiving print jobs and optionally for manipulating print jobs. The local user interface unit 11 is integrated to the print engine and may comprise a display unit and a control panel. Alternatively, the control panel may be integrated in the display unit, for example in the form of a touch-screen control panel. The local user interface unit 11 is connected to a control unit 12 connected to the printer 1. The control unit 12, for example a computer, comprises a processor adapted to issue commands to the printer 1, for example for controlling the print process. The printer 1 may optionally be connected to a network. The connection to the network can be via cable or wireless. The printer 1 may receive printing jobs via the network. Further, optionally, the control unit 12 of the printer 1 may be provided with an input port, such as a USB port, so printing jobs may be sent to the printer 1 via this input port.

The printer 1 in Fig. 1 is a so-called hybrid printer, capable of handling both flexible media and rigid substrates. In Fig. 1, the printer 1 operates in a first print mode, wherein the printer 1 is configured for transporting rigid substrates, such as the print medium 15. Such rigid print media 15 may be panels for doors, walls, etc., corrugated media, plates formed of plastic or metal, etc. To handle these rigid print media 15, the printer 1 in Fig. 1 is configured with a substantially linear transport path: from the media input device 14, the print medium 15 moves forward along the inkjet printing assembly 7 at a at substantially constant height. The media input unit 14 and the receiving unit are positioned at the level of the medium support surface of the belt 4. A flexible web medium (not shown) may also be supplied to the printer 1, which web medium may be composed of e.g. paper, label stock, coated paper, plastic or textile. The web medium is supplied from the input roller 2A and extends across the belt 4 to the take-up roller 2B, where the web medium is re-wound. The printer 1 is configured to swiftly and efficiently switch between print modes.

The methods of the present invention are also applicable to a printer which is only capable of handling rigid substrates.

The media input unit 14 has a rectangular surface with two alignment origins for placing a print medium to be printed upon. Each alignment origin of the rectangular surface comprises a different sign 21, 22 and the print controller has in storage a printable image of each different sign 21, 22. In this example a first sign 21 is in a first corner of the rectangular surface 14 and represents a geometric image being a cross image. In this example the second sign 22 is in a second corner of the rectangular surface 14 and represents a geometric image being a circle image. Since the signs 21, 22 are different the corresponding alignment corners are uniquely identifiable by the operator. In Fig. 1 the rigid print media 15 is aligned in the corner provided with the second sign 22.

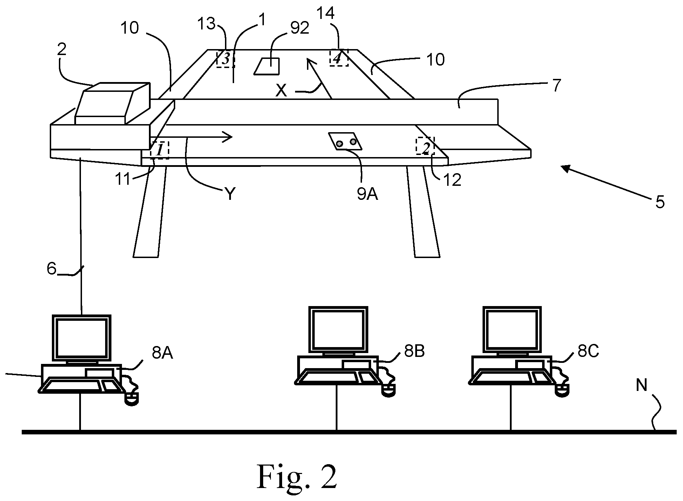

Fig. 2 shows a second example of a printing system according to the present invention. The second printing system is a print system 5 comprising a number of workstations 8B, 8C, which may be personal computers or other devices for preparing image data for prints to be printed. These workstations have access to a network N for transferring print jobs comprising the image data to a print controller 8A that is configured to receive the print jobs for prints and derive pass images. The print controller 8A may be part of the print system 5 connected to a print controller of the print system 5 via a connection 6. The print system 5 further comprises a print head 2 attached to an armature 7 for applying colorants, for example cyan (C), magenta (M), yellow (Y), black (K) and white (W) colorant, or varnish to a flat media piece 9A placed on a flatbed area 1 in order to obtain a printed image. The armature 7 may be a gantry above the flatbed area 1 as shown in Fig. 1 or a robot arm (not shown) moving in a plurality of directions over the flatbed area 1. The flatbed area 1 is the surface of the flatbed which is at least partially printable by the print head 2. The pieces of media may be so small that they are completely placed on the flatbed area 1, but a piece of media which is larger than the flatbed area, in which case an image which is going to cover the whole piece of media must be printed into a plurality of parts of the image, is not excluded. A first piece 9A has already been printed upon, while another piece 92 is not provided with any recording material yet. The print head 2 reciprocally scans the flatbed area 1 in the second direction Y along a gantry 7 perpendicular to a first direction X of the gantry 7 over the flatbed area 1 along guiding parts 10. During printing of an image on the piece 9A of media the piece 92, 9A of media is not moved on the flatbed area 1. This way of working is advantageous for rigid print media. A print head which is as wide as the flatbed area may also be envisaged within the scope of the invention. Such a print head may be moveable in at least one direction over the flatbed area 1. The piece of media 9A may have a thickness of 10 mm, while the piece of media 92 may have a thickness of 20 mm.

The flatbed area 1 has a rectangular surface with four alignment origins for placing a print medium to be printed upon. Each alignment origin of the rectangular surface 1 comprises a different sign 11 - 14 and the print controller has in storage a printable image of each different sign 11 - 14. In this example a first sign 11 is in a first corner of the rectangular surface 1 and represents a numerical image representing a number one (1). In this example a second sign 12 is in a second corner of the rectangular surface 1 and represents a numerical image representing a number two (2). In this example a third sign 13 is in a third corner of the rectangular surface 1 and represents a numerical image representing a number three (3). In this example a fourth sign 14 is in a fourth corner of the rectangular surface 1 and represents a numerical image representing a number four (4). Since the signs 11 - 14 are different the corresponding alignment corners are uniquely identifiable by the operator.

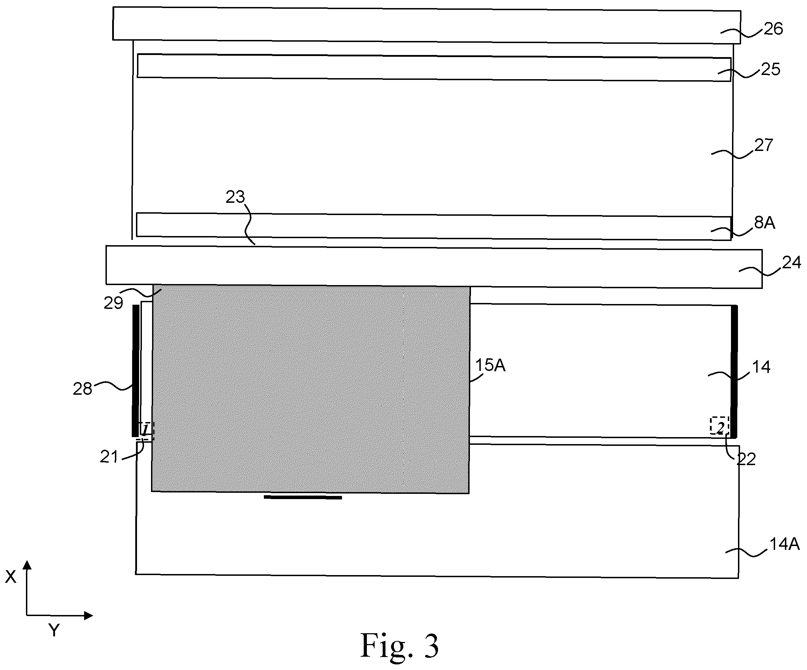

Fig. 3 is a schematic top view of the first printing system shown in Fig. 1. A print medium 15A is laid down on a feed table 14 which may be extended by an additional table 14A in case of media which have a large size in the transport direction X. The leading edge of the print medium 14A can be detected by an area camera (not shown) in a detection zone 8A of the area camera. The detection zone 8A is part of a print surface 27. The print medium is fed over the feed table 14 and an idler 24 into the detection zone 8A towards the print surface 27. The print surface 27 is also provided with a traction zone 25 guiding the print medium 15A to a drive roller 26. A print head assembly (not shown) is provided above the print surface 27 which moves along a carriage in the Y direction. The print medium 15A is guided along a side guide 28 extending in the transport direction X. The side guide 28 is provided to position the print medium 15A at the correct position in the Y direction. The print medium 15A is fed into the printer until the leading edge of the print medium reaches the detection zone 8A of the area camera. Then the feeding is stopped, the vacuum system is invoked to suck the print medium 15A to the feed table 14 so that it cannot move any more.

The feed table 14 has a rectangular surface with two alignment origins for placing a print medium to be printed upon. Each alignment origin of the rectangular surface comprises a different sign 21, 22 and the print controller has in storage a printable image of each different sign 21, 22. In this example a first sign 21 is in a first corner of the rectangular surface 14 and represents a numerical image being a number one (1). In this example the second sign 22 is in a second corner of the rectangular surface 14 and represents a numerical image being a number two (2). Since the signs 21, 22 are different the corresponding alignment corners are uniquely identifiable by the operator. In Fig. 3 the rigid print media 15A is aligned in the corner provided with the first sign 21. According to the present invention a printable image of the first sign 21 will be printed on the front side of the print medium 15A in the corner indicated by the reference number 29. In fact the printer shown in Fig. 3 is a multi-lane printer. The printer has two lanes, i.e. a first lane for left alignment of print media in the first corner and a second lane for right alignment of print media in the second corner.

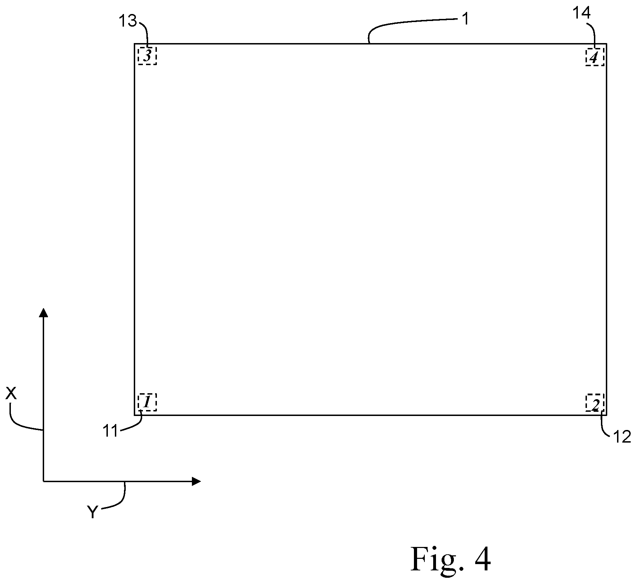

Fig. 4 is a top view of the flatbed area 1 of Fig. 2. The flatbed area 1 has a rectangular shape with four corners. In each of the corners a unique sign 11 - 14 is printed on, adhered to or engraved in the flatbed 1. In this example the signs 11 - 14 are the numbers one (1), two (2), three (3) and four (4). A print medium may be aligned in one of the corners of the flatbed area 1. At the same time multiple print media may be aligned in multiple corners of the flatbed area 1 to increase a productivity of the printer.

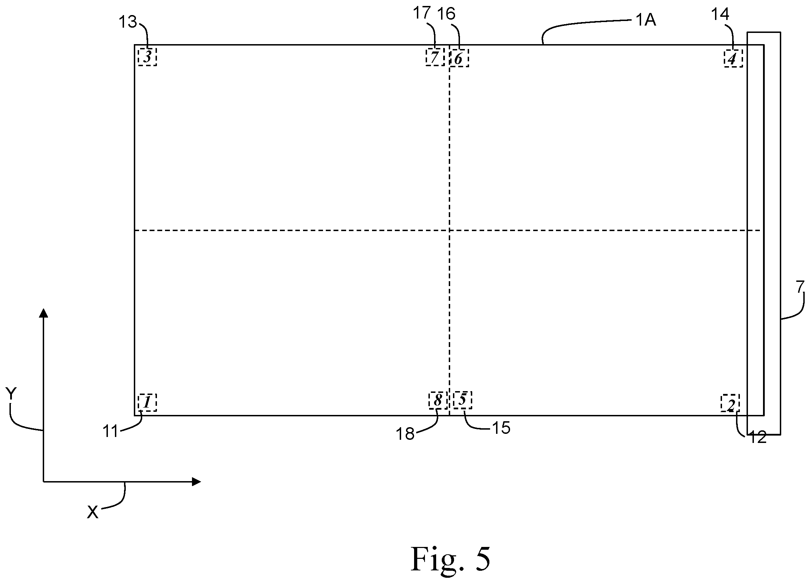

Fig. 5 is a top view of a larger flatbed area 1A than the flatbed area 1 shown in Fig. 4. At one side of the flat bed area 1A the armature 7 resides when printing is paused, for example due to print head maintenance or when a print job has ended. The flatbed area 1A has a rectangular surface with eight alignment origins for placing a print medium to be printed upon. Each alignment origin of the rectangular surface 1A comprises a different sign 11 - 18 and the print controller has in storage a printable image of each different sign 11 - 18. In this example a first four signs 11 - 14 are positioned in the corners of the rectangular surface 1A and represents a numerical image representing the numbers one (1), two (2), three (3) and four (4) respectively. In the middle of each long side of the flatbed area 1A in the X direction there are two more alignment origins with signs 15 - 18 which represent the numbers five (5), six (6), seven (7) and eight (8) respectively. Since the signs 11 - 18 are different the corresponding alignment origins are uniquely identifiable by the operator. For example, according to the present invention on a front side of a media piece which is aligned in the first alignment origin with the sign 11 a printable sign "3" or "8" may be printed to assist the operator when the media piece is turned over and must be printed on the back side. When the printable sign "3" is printed on the front side, the intention is to turn over the media piece to the alignment origin with the sign 13. When the printable sign "8" is printed on the front side, the intention is to turn over the media piece to the alignment origin with the sign 18. In this example, the printable signs "3" and "8" are selected to be printed on the media piece since the corresponding alignment origin are the closest alignment origins to the first alignment origin with the sign 11.

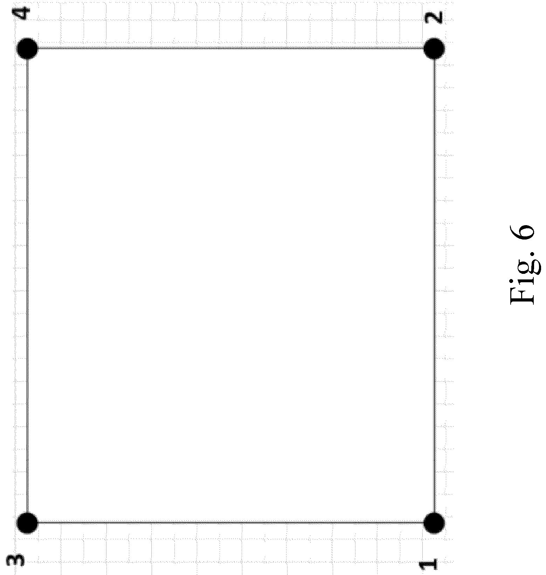

Figs. 6 - 8 are schematic drawings of an example of a method according to the present invention. In this example a print job has arrived at the flatbed printer shown in Fig. 2 with a plurality of print job settings. A first print job setting specifies duplex printing, i.e. there is a front image and back image available. The front image is intended to be printed on the front side of the print medium. The back image is intended to be printed on the back side of the print medium. Another print job settings specifies 4 copies, i.e. 4 rigids need to be placed on the flatbed of the flatbed printer to be processed for this print job. Another print job setting specifies a flip over the short edge of the rigid when turning the rigid from the front side to the back side.

Fig. 6 shows the surface of the printer wherein the alignment origins are indicated by exaggerated black dots numbered 1 to 4.

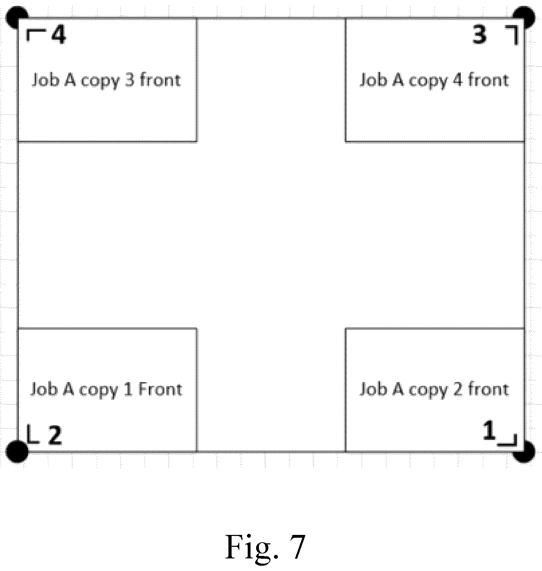

Fig. 7 shows the surface of the printer on which four rigids are placed aligned at the four alignment origins numbered 1 to 4 in Fig. 6. In the alignment origin numbered 1 a first rigid is placed for printing the front side image of a first copy of the print job. In the alignment origin numbered 2 a second rigid is placed for printing the front side image of a second copy of the print job. In the alignment origin numbered 3 a third rigid is placed for printing the front side image of a third copy of the print job. In the alignment origin numbered 4 a fourth rigid is placed for printing the front side image of a fourth copy of the print job. Besides printing the front side image on each rigid in a corner of the rigid corresponding to the alignment origin of the surface of the printer also a different sign is printed on each rigid. The sign printed on each rigid comprises a hook image and a number image. The number image indicates the alignment origin at which the rigid has to be aligned for printing the back side of the rigid in the next processing step after the rigids have been turned downside up. For example, the printed first rigid comprises a sign with the number 2, the printed second rigid comprises a sign with the number 1, the third rigid comprises a sign with the number 4 and the fourth rigid comprises a sign with the number 3. The signs are printed to assist the operator in what alignment origin to position the rigid for printing of the back side of the rigid.

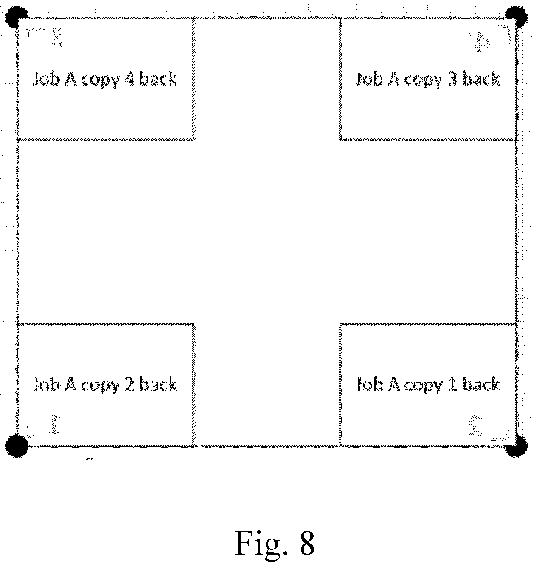

Fig. 8 shows the surface of the printer on which the four rigids are placed after turnover of the rigids. The turnover rigids are aligned in the alignment origins as indicated by the signs printed on the front sides of the rigids as shown in Fig. 7. Fig. 8 shows the back sides of the rigids which can be printed upon now with the back side image of the print job. In the alignment origin numbered 1 the second rigid is placed for printing a back side image of the second copy of the print job. In the alignment origin numbered 2 the first rigid is placed for printing the back side image of a first copy of the print job. In the alignment origin numbered 3 the fourth rigid is placed for printing the back side image of a fourth copy of the print job. In the alignment origin numbered 4 the third rigid is placed for printing the back side image of a third copy of the print job. The signs are greyed out since there are not visible anymore since the signs are printed on the front side of the rigids which is now the down side of the rigids on the surface. The signs help the operator while depositing the rigids on the surface of the printer.

In the Figs. 6 - 8 a way of working is demonstrated for a flat bed printer with a plurality of alignment origins. However, the way of working is also applicable to a hybrid printer for printing rigids and rolls where two or more alignment origins are available in two or more input lanes for inputting rigids onto the surface. Each lane corresponds to one alignment origin. In case of a printer having just two input lanes the rigids may be left aligned in a left alignment origin in the first lane or right aligned in a right alignment origin in the second lane. Left and right aligned are defined from the viewpoint of the operator towards to front of the printer when putting the rigids in the printer. In the hybrid printer multiple lanes with a right alignment origin may exist. In the hybrid printer also multiple lanes with a left alignment origin may exist.

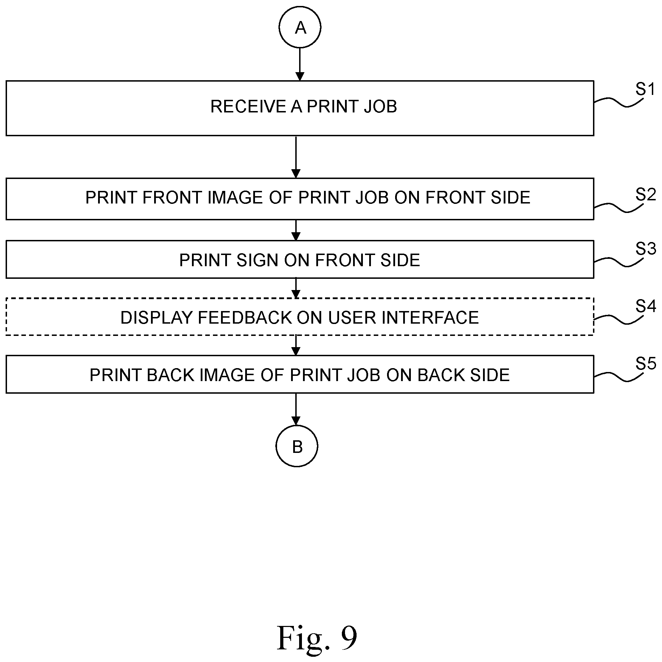

Fig. 9 is a flowchart of an embodiment of the method according to the present invention. Starting point of the method is point A. Point A leads to a first step S1.

In the first step S1 the print controller of the flatbed printer receives a print job for printing at least one first image on a first side of the print medium according to the print job data and the print job settings of the print job. The print medium is intended to be aligned in a first alignment origin of the surface and at least one second image on a second side of the print medium according to the print job data and the print job settings of the print job. The print medium is intended to be aligned in a second alignment origin of the surface.

In a second step S2 the at least one first image is printed on the first side of the print medium which is aligned in the first alignment origin.

In a third step S3 the printable image of the sign of the second alignment origin of the surface is printed in a medium corner of the plurality of medium corners of the print medium, which medium corner corresponds in which alignment origin the print medium is currently aligned on, on the first side of the print medium. The printable image of the sign is retrieved from memory of the print controller of the printer.

The second step S2 and the third step S3 are preferably executed simultaneously, i.e. the printing of the at least one first image is combined in passes with the printing of the printable image of the sign.

Between the third step S3 and a fifth step S5 the print medium is turned upside down on the surface. This may be done manually by the operator.

To assist the operator in doing so, the method comprises a fourth optional step S4 of giving feedback to the operator on a user interface screen of the printer. The feedback may comprise additional instructions how the print media which are turned upside down should be alignment in the respective alignment origins. For example, the print medium may be flipped over on a short edge of the print medium or on a long edge of the print medium. The fourth step S4 is optional as indicated by the dashed rectangle of the fourth step S4 shown in Fig. 9. The feedback is also valuable in case of a variable data print job. In the latter case the user interface screen may display the information printed in the signs on the front side of the print medium. The variable data print job comprises a plurality of data records a corresponding number of a data record may be printed on the first side of the print medium close to the printable image of the sign of the respective alignment origin. The data record number may also be displayed on the user interface screen.

In a fifth step S5 the at least one second image is printed on the second side of the print medium which is aligned in the second alignment origin.

The method ends in an end point B.

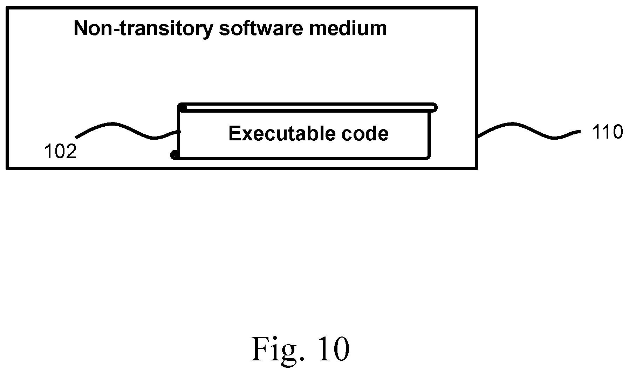

Fig. 10 schematically shows a non-transitory software medium 110 according to the invention. The software medium 110 comprises executable code 102 configured to, when executed, perform the method according to the invention, e.g. as described with respect to either the printers shown in Figs. 1 - 2 or the method shown in Fig. 9 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

The above disclosure is intended as merely exemplary, and not to limit the scope of the invention, which is to be determined by reference to the following claims.

## Claims

1. Printer comprising a rectangular surface with alignment origins for placing a print medium to be printed upon, the print medium having a plurality of medium corners, a print controller for receiving at least one print job comprising print job settings and print job data to be printed on the print medium and controlling the printing of the at least one received print job on the print medium, an armature constructed to move over the surface in at least one direction, and a print head configured to eject recording material on the print medium and attached to the armature,
wherein each alignment origin of the rectangular surface comprises a different sign and the print controller has in storage a printable image of each different sign.

2. Printer according to claim 1, wherein the different sign is an alphanumeric sign, a pictogram or a two-dimensional geometrical object.

3. Printer according to claim 1 or 2, wherein the printer is a flatbed printer and the rectangular surface is a flatbed which has at least four alignment origins, and wherein four alignment origins of the at least four alignment origins are positioned at the corners of the flatbed.

4. Printer according to claim 1 or 2, wherein the printer is a hybrid printer for printing on rolls and rigids which are fed into the printer by means of a feeding table, and the rectangular surface is the feeding table which comprises one alignment origin for left alignment of the print medium and another alignment origin for right alignment of the print medium.

5. A printer according to any of the preceding claims, wherein the printer comprises a user interface and the print controller is configured to send additional instructions to the user interface how and where to move a rigid for a next production step.

6. A method for duplex printing on a printer according to any of the claims 1 - 5, wherein the method comprises the steps of
- the print controller receiving a print job for printing at least one first image on a first side of the print medium according to the print job data and the print job settings of the print job, wherein the print medium is intended to be aligned in a first alignment origin of the surface and at least one second image on a second side of the print medium according to the print job data and the print job settings of the print job, wherein the print medium is intended to be aligned in a second alignment origin of the surface,
- printing the at least one first image on the first side of the print medium which is aligned in the first alignment origin, and
- printing the at least one second image on the second side of the print medium which is aligned in the second alignment origin,
wherein the method comprises the step of
- printing the printable image of the sign of the second alignment origin of the surface in a medium corner of the plurality of medium corners of the print medium, which medium corner corresponds in which alignment origin the print medium is currently aligned on, on the first side of the print medium simultaneously with printing the at least one first image.

7. A method according to claim 6, wherein the print medium is left aligned when printing the at least one first image on the first side of the print medium and the print medium is right aligned when printing the at least one second image on the second side of the print medium.

8. A method according to any of the claims 6 - 7, wherein the print job is a variable data print job comprising a plurality of data records and the method comprises the step of printing a corresponding number of a data record on the first side of the print medium close to the printable image of the sign of the second alignment origin.

9. A method according to any of the claims 6 - 8, wherein the printer comprises a user interface screen for user interaction and the method comprises the step of giving feedback or instructions on the user interface screen how the print medium when turned upside down is to be aligned in the respective alignment origin before printing on the second side of the print medium.

10. Non-transitory recording medium comprising computer executable program code configured to instruct a flatbed or hybrid printer to perform the method according to any of the claims 6 - 9.
